# EUROPÄISCHE PATENTSCHRIFT

(11) **EP 1 032 256 B1**
(45) Veröffentlichungstag und Bekanntmachung des Hinweises auf die Patenterteilung: **12.03.2003**
(21) Anmeldenummer: 98962277.4
(22) Anmeldetag: 17.11.1998
(51) Int. Cl.: A01G 13/10, A01M 1/18

(54) **VORRICHTUNG ZUM VERHINDERN DES HOCHKLETTERNS DES FROSTSPANNERS AN BAUMSTÄMMEN**
DEVICE FOR PREVENTING THE WINTER MOTH WORM FROM CLIMBING UP TREE TRUNKS
DISPOSITIF DESTINE A EMPECHER L'ASCENSION DE LA PHALENE HIEMALE SUR LES TRONCS D'ARBRES

(30) Priorität: 21.11.1997 DE 29720686 U; 16.07.1998 DE 19831952
(43) Veröffentlichungstag der Anmeldung: 06.09.2000
(73) Patentinhaber: Franz, Marcel, 66780 Rehlingen-Siersburg (DE)
(72) Erfinder: Franz, Marcel, 66780 Rehlingen-Siersburg (DE)
(74) Vertreter: Melzer, Wolfgang, Dipl.-Ing.
(86) Internationale Anmeldenummer: DE9803376
(87) Internationale Veröffentlichungsnummer: WO99026468

(56) Entgegenhaltungen:
- EP-A- 0 087 134
- DE-A- 4 321 511
- FR-A- 2 638 058
- GB-A- 191 127 308
- US-A- 1 335 845
- US-A- 2 261 360
- US-A- 4 555 866

## Beschreibung

Die Erfindung betrifft eine Vorrichtung zum Verhindern des Hochkletterns des Frostspanners an Baumstämmen.

In der Forstwirtschaft, in Parkanlagen und im Obstanbau, insbesondere beim Kern- und Steinobstanbau, ist, neben anderen Schadinsekten, der Frostspanner ein Schadschmetterling, dessen Raupen in den Baumkronen große Schäden verursachen.
In Jahren mit starkem Auftreten des Frostspanners können Frostspannerraupen im Obstanbau im Frühjahr schwere Fraßschäden in der Baumkrone und erhebliche bis totale Ernteverluste verursachen.
Die Bekämpfung dieses Schädlings ist wegen seiner oft hohen Populationsdichte außerordentlich schwierig.
Der Schlupfzeitraum der Raupen im Frühjahr zieht sich über mehrere Wochen hin.

Eine bekannte Vorgehensweise zur Abwehr des Baumbefalls durch Raupen oder andere baumschädigende Insekten, wie sie z.B. in US-2,261,360-A beschrieben ist, besteht darin, daß um den Baumstamm des zu schützenden Baumes ein Ringband dichtschließend angebracht wird und an diesem ein Zuschnitt aus biegsamem Papier oder Metall angebracht wird zur Bildung einer längsdurchschnittenen, kegelstumpfförmigen nach unten offenen Glocke, wobei die beiden Längskanten sich überlappen und miteinander verbunden werden, so daß am Stamm heraufkriechende Insekten unter der Glocke am weiteren Hinaufkriechen gehindert werden. Insbesondere ist wesentlich, daß gasförmiges Gift unter die Glocke eingebracht wird, um die Schadinsekten zu töten.

Nachteilig ist hierbei, daß für jeden Stammdurchmesser spezielle Glockengrößen und damit auch entsprechend kaum korrigierbare Zuschnitte benötigt werden, um die dichte Schließung um den Stamm zu erreichen. Ferner ist eine dichte Schließung bei ovalen oder unregelmäßigen Stammdurchmessern bzw. bei Stämmen mit einer gefurchten Rinde nicht mehr gewährleistet.

Aus EP-0 087 134-A1 ist eine ebenfalls glocken- bzw. trichterförmige Vorrichtung bekannt, die aus Kunststoffolie bestehen kann und von einem Endlosband abgeschnitten werden kann. Das Ringband ist als Kleber am Rand des Endlosbands ausgebildet. Zur Bildung des Trichters wird die Folie im Bereich des Ringbandes beim Anbringen am Stamm gefältelt, was sehr aufwendig ist und große Sorgfalt erfordert, da sicher verhindert werden muß, daß Insekten durch eventuelle Lücken hindurchkriechen können.

Zudem ist speziell der Einsatz einer solchen Glocke bzw. eines solchen Trichters gegen den Frostspanner nachteilig, da nur die Weibchen des Frostspanners flugunfähig sind. Die flugfähigen Männchen können leicht unter die Glocke zu den Weibchen fliegen und diese noch begatten, so daß die Weibchen ihre befruchteten Eier unter der Glocke auf dem Stamm ablegen. Die Eier lassen sich aus der gefurchten Rinde nur schlecht entfernen oder müssen mit Insektiziden vernichtet werden.
Andernfalls können die geschlüpften Raupen entweder über den Glockenrand oder über kleine Öffnungen an der oberen Befestigung der Glocke in den Kronenbereich des Baumes gelangen.
Deshalb wird eine zusätzliche Bekämpfung der Schadinsekten und ihrer Raupen mit chemischen Spritzmitteln erforderlich, wie das die US-2,261,360-A ausdrücklich fordert.

Der Erfindung liegt daher die Aufgabe zugrunde, eine Vorrichtung zum Verhindern des Hochkletterns des Frostspanners an Baumstämmen anzugeben, die einfach, jedoch sicher anbringbar ist und ohne chemische Insektenbekämpfungsmittel auskommt.

Gelöst wird diese Aufgabe nach der Erfindung durch einen Sperrzylinder mit einem durchgehenden, parallel zur Längsachse verlaufenden Schnitt, dessen Durchmesser größer als der Baumstammdurchmesser ist, und der an seinem oberen Ende mit einer Dichtleiste an dem Baumstamm anliegt, wobei der Sperrzylinder und die Dichtleiste mit einem Befestigungsmittel, z.B. Klebeband, Klettverschluß oder Schnur, am Baumstamm befestigt sind und der Sperrzylinder aus einem Endlosband maßgerecht geschnittenen Bandabschnitt besteht.

Bei dem Sperrzylinder können vorteilhafterweise an dessen Innenseite Vorsprünge, z.B. Noppen, Luftpolsterfolie, Längsstreifen oder Borsten, angeordnet sein.

Der Sperrzylinder kann aus einer Luftpolsterfolie bestehen und einen oberen, nach innen umgeklappten Randstreifen aufweisen, der mit einem Befestigungsmittel, z.B. Klebeband oder Schnur, am Baumstamm befestigt ist, wobei der Sperrzylinder aus einem aus einem Endlosband maßgerecht geschnittenen Bandabschnitt besteht. Diese Umklappung entspricht der obengenannten Dichtleiste.

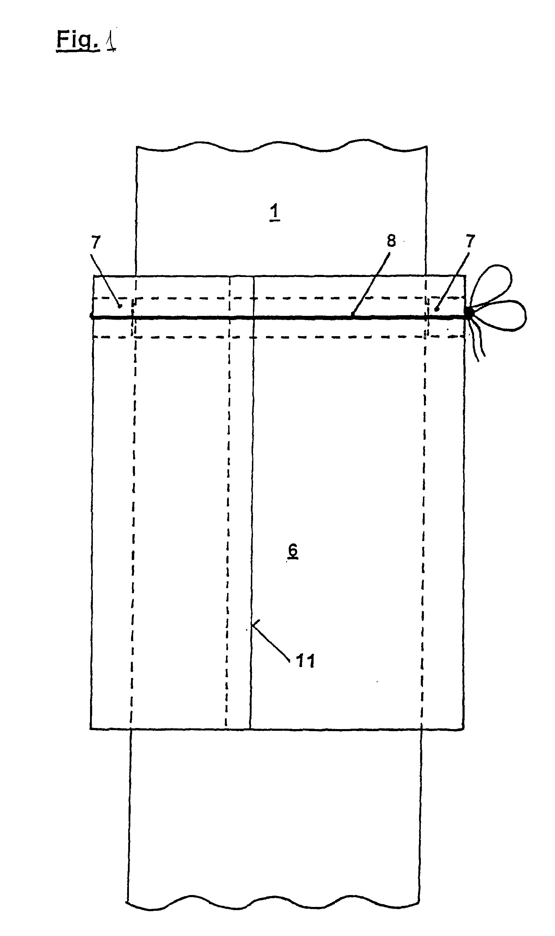

Ein Ausführungsbeispiel der Erfindung wird nachfolgend anhand der Zeichnung näher erläutert und beschrieben.

Die Figur zeigt einen Sperrzylinder in Seitenansicht, etwa in natürlicher Größe.

Der in der Figur dargestellte Sperrzylinder 6, dessen Durchmesser größer als der Baumstammdurchmesser ist, liegt an seinem oberen Ende mit einer am Sperrzylinder 6 befestigten Dichtleiste 7 an dem Baumstamm 1 an. Diese Dichtleiste 7 schließt den Sperrzylinder oberseitig so ab, daß keine Schadinsekten durch Spalten in der Dichtleiste 7 in den Kronenbereich des zu schützenden Baumes gelangen können.

An dieser Position ist der Sperrzylinder 6 mit einer Schnur 8 am Baumstamm befestigt.

Der Sperrzylinder 6 weist einen durchgehenden, parallel zur Längsachse verlaufenden Schnitt 11 auf.

An der Schnittstelle überlappen sich die Randstreifen des Zylinders und ermöglichen so eine Abdichtung der Schnittstelle.

Der Sperrzylinder 6 läßt sich am Einsatzort herstellen, indem aus einem Endlosband maßgerecht abgeschnittene Bandabschnitte hergestellt werden.

## Patentansprüche

1. Vorrichtung zum Verhindern des Hochkletterns des Frostspanners an Baumstämmen,
**gekennzeichnet durch**
- einen Sperrzylinder (6) mit einem durchgehenden, parallel zur Längsachse verlaufenden Schnitt (11),
- dessen Durchmesser größer als der Baumstammdurchmesser ist,
- der an seinem oberen Ende mit einer Dichtleiste (7) an dem Baumstamm (1) anliegt,
wobei
- der Sperrzylinder (6) und die Dichtleiste (7) mit einem Befestigungsmittel, z.B. Klebeband, Klettverschluß oder Schnur (8), am Baumstamm (1) befestigt sind
und
- der Sperrzylinder (6) aus einem aus einem Endlosband maßgerecht abgeschnittenen Bandabschnitt besteht.

2. Vorrichtung nach Anspruch 1,
**dadurch gekennzeichnet, daß**
an der Innenseite des Sperrzylinders (6) runde oder längliche Vorsprünge z.B. Noppen, Luftpolsterfolie, Längsstreifen oder Borsten, angeordnet sind.

3. Vorrichtung zum Verhindern des Hochkletterns des Frostspanners an Baumstämmen,
**gekennzeichnet durch**
- einen Sperrzylinder aus Luftpolsterfolie,
- der einen oberen, nach innen umgeklappten Randstreifen aufweist,
- welcher mit einem Befestigungsmittel, z.B. Klebeband oder Schnur, am Baumstamm befestigt ist,
wobei
- der Sperrzylinder aus einem aus einem Endlosband maßgerecht geschnittenen Bandabschnitt besteht.

## Claims

1. Device for preventing the winter moth from climbing up tree trunks, **characterized by**
- a locking cylinder (6) having a through-cut (11) running parallel to the longitudinal axis,
- the diameter of which is greater than the tree trunk diameter,
- which, at its upper end, bears against the tree trunk (1) with a sealing strip (7),
- the locking cylinder (6) and the sealing strip (7) being fastened to the tree trunk (1) by a fastening means, for example adhesive tape, velcro fastening or cord (8),
and
- the locking cylinder (6) consisting of a tape portion cut to size out of a continuous tape.

2. Device according to Claim 1, **characterized in that** on the inside of the locking cylinder (6) there are disposed round or oblong projections, for example knobs, air-cushion film, longitudinal strips or bristles.

3. Device for preventing the winter moth from climbing up tree trunks, **characterized by**
- a locking cylinder made from air-cushion film,
- which has an upper marginal strip which is folded over inwards,
- which is fastened to the tree trunk by a fastening means, for example adhesive tape or cord.
- the locking cylinder consisting of a tape portion cut to size out of a continuous tape.

## Revendications

1. Dispositif destiné à empêcher l'ascension de la phalène hiémale sur des troncs d'arbre, **caractérisé par**
- un cylindre de blocage (6) comportant une fente (11) continue, parallèle à l'axe longitudinal,
- dont le diamètre est supérieur au diamètre du tronc d'arbre,
- qui repose à son extrémité supérieure par une baguette d'étanchéité (7) contre le tronc d'arbre (1),
étant entendu que
- le cylindre de blocage (6) et la baguette d'étanchéité (7) sont fixés au tronc d'arbre (1) à l'aide d'un moyen de fixation, par exemple ruban adhésif, ruban agrippant ou ficelle (8)
et
- le cylindre de blocage (6) se compose d'un tronçon de bande découpé sur mesure à partir d'une bande sans fin.

2. Dispositif selon la revendication 1, **caractérisé en ce que** des éléments en saillie ronds ou longitudinaux, par exemple nopes, feuille à coussin d'air, pattes longitudinales ou poils, sont disposés sur la face intérieure du cylindre de blocage (6).

3. Dispositif destiné à empêcher l'ascension de la phalène hiémale sur des troncs d'arbre,
**caractérisé par**
- un cylindre de blocage en une feuille à coussin d'air,
- qui présente une patte périphérique supérieure rabattue vers l'intérieur,
- qui est fixé au tronc d'arbre à l'aide d'un moyen de fixation, par exemple ruban adhésif ou ficelle,
étant entendu que
- le cylindre de blocage se compose d'un tronçon de bande découpé sur mesure à partir d'une bande sans fin.
